# EUROPÄISCHE PATENTANMELDUNG

(11) **EP 0 729 216 A2**
(43) Veröffentlichungstag der Anmeldung: **28.08.1996**
(21) Anmeldenummer: 96101835.5
(22) Anmeldetag: 08.02.1996
(51) Int. Cl.: H02K 21/04

(54) **Hybriderregte Synchronmaschine**

(30) Priorität: 21.02.1995 DE 19505965
(71) Anmelder: SIEMENS AKTIENGESELLSCHAFT, 80333 München (DE)
(72) Erfinder: Schüller, Uwe, Dr., D-98693 Ilmenau (DE); Brandes, Jürgen, Dr., D-97616 Bad Neustadt (DE)

(57) **Zusammenfassung**

Die Erfindung betrifft eine hybriderregte Synchronmaschine, deren in einem magnetischen Rückschlußjoch (1) angeordnetes Ständerblechpaket axial in mindestens zwei Pakethälften (2 und 3) unterteilt ist, zwischen denen eine Erregerspule (5) angeordnet ist, bei welcher Maschine der Läufer ebenfalls unterteilt ist und jede Läuferhälfte (8 bzw.9) der Polteilung entsprechend aufeinanderfolgend mit Dauermagneten (12) bestückte und nicht mit Dauermagneten bestückte Polteile (14,16) aufweist, wobei die eine Läuferhälfte (8) mit Dauermagneten (12) der einen Polarität (N) und die andere Läuferhälfte (9) mit Dauermagneten (12) der anderen Polarität (S) bestückt ist und die mit Dauermagneten (12) bestückten Polteile (14) beider Läuferhälften (8 und 9) um eine Polteilung gegeneinander versetzt sind. Die für eine Drehzahl- bzw. Spannungsregelung notwendige elektrische Erregerleistung kann dadurch vermindert werden, daß die Dauermagnete (12) in im Blechpaket der Läuferhälften (8 und 9) vorgesehene Aufnahmeöffnungen (11) eingesetzt sind und die an die Aufnahmeöffnungen (11) zum Läuferumfang hin angrenzenden Kernteile (14) lediglich über Sättigungsstege (15) mit den nicht mit Dauermagneten bestückten Polteilen (16) verbunden sind.

## Beschreibung

Die Erfindung betrifft eine hybriderregte Synchronmaschine gemäß dem Oberbegriff des Anspruchs 1.

Eine solche Maschine und deren Funktionsweise ist durch die EP-A-0 620 634 bekannt. Bei dieser Maschine sind die Dauermagnete am Umfang des Läuferkerns angeordnet. Dies bedingt, daß die Dauermagnete zur ausreichenden Sicherung gegen die auftretenden Fliehkräfte mit einer Bandage umgeben werden müssen. Durch eine solche Bandage wird der geometrische Luftspalt vergrößert. Dadurch ergibt sich auch eine Erhöhung der der Drehzahl- bzw. Spannungsregelung dienenden elektrischen Erregerleistung. Außerdem führt die Vergrößerung des Luftspaltes zu höheren Streuverlusten.

Der Erfindung liegt die Aufgabe zugrunde, eine Maschine der gattungsgemäßen Art so auszubilden, daß für die Drehzahl- bzw. bzw. Spannungsregelung eine wesentlich geringere elektrische Erregerleistung benötigt wird.

Die Lösung der gestellten Aufgabe gelingt gemäß der Erfindung durch die im Kennzeichen des Anspruchs 1 angegebenen Merkmale. Durch die Anordnung der Dauermagnete im Läuferkern entfallen jegliche den Luftspalt vergrößernde Befestigungsmittel. Durch die Sättigungsstege wird ein magnetischer Kurzschluß der in die Aufnahmeöffnungen eingebrachten Dauermagnete verhindert.

Eine weitere Verminderung der Streuverluste ergibt sich dadurch, daß die Kernteile in Querrichtung einen erhöhten magnetischen Widerstand aufweisen. Dies läßt sich in einfacher Weise dadurch erreichen, daß die Kernteile mit sich im wesentlichen parallel zu dem sie durchsetzenden magnetischen Fluß erstreckenden Schlitzen versehen sind.

Zur Verminderung der Streuverluste trägt auch noch bei, daß der sich nach radial innen an jede Aufnahmeöffnung anschließende, der Polteilung entsprechende Polsektor ebenfalls mit sich im wesentlichen parallel zu dem ihn durchsetzenden magnetischen Fluß erstreckenden Schlitzen versehen ist.

Anhand eines in der Zeichnung dargestellten Ausführungsbeispieles wird die Erfindung nachfolgend naher beschrieben. Es zeigt:
- FIG 1: in schematischer Darstellung eine hybriderregte Synchronmaschine im Längsschnitt,
- FIG 2: den Läufer der Synchronmaschine im Schnitt entlang der Linie II-II in FIG 1,
- FIG 3: den Läufer der Synchronmaschine im Schnitt entlang der Linie III-III in FIG 1,
- FIG 4: eine weitere mögliche Anordnung von Dauermagneten im Läuferkern.

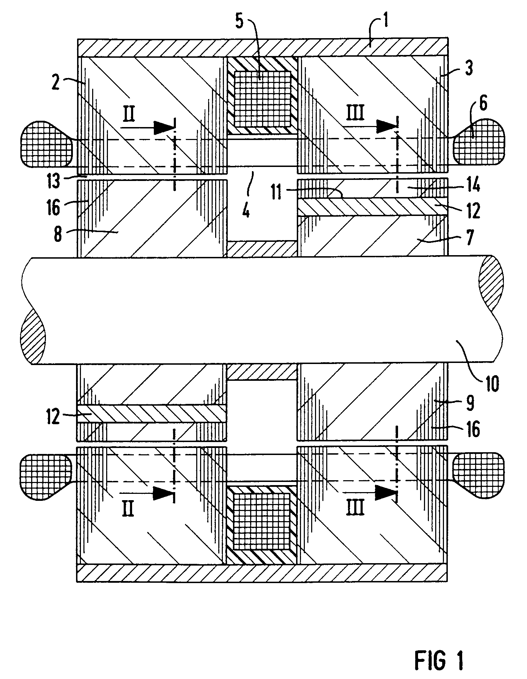

Die in FIG 1 dargestellte Synchronmaschine weist ein in einem Rückschlußjoch 1 angeordnetes Ständerblechpaket auf, das in axialer Richtung in zwei Pakethälften 2 und 3 unterteilt ist, wobei diese beiden Pakethälften 2 und 3 mit axialem Abstand zueinander angeordnet sind. Indem somit zwischen den beiden Pakethälften 2 und 3 bestehenden Zwischenraum 4 ist eine als Ringspule ausgebildete elektrische Erregerspule 5 eingefügt. Das Ständerblechpaket ist ferner mit einer üblichen Ständerwicklung 6 versehen.

Der Läufer 7 der Maschine ist in der gleichen Weise wie das Ständerblechpaket in zwei Läuferhälften 8 und 9 unterteilt, die mit gleichem axialen Abstand wie die beiden Pakethälften 2 und 3 der Ständerwicklung zueinander beabstandet auf der Läuferwelle 10 angeordnet sind. Im Blechpaket jeder Läuferhälfte 8 bzw.9 sind sich geradlinig in Umfangsrichtung erstreckende Aufnahmeöffnungen 11 vorgesehen, in die Dauermagnete 12 eingesetzt sind. Die Dauermagnete 12 sind hinsichtlich ihrer Polarität in der einen Läuferhälfte 8 so angeordnet, daß sie beispielsweise mit ihrem Nordpol zum Luftspalt 13 der Maschine hinweisen. In der anderen Läuferhälfte 9 ist die Anordnung der Dauermagnete 12 so getroffen, daß diese mit ihrem Südpol zum Luftspalt 13 hin gerichtet sind. Die Dauermagnete 12 der einen Läuferhälfte 8 sind außerdem gegenüber den Dauermagneten 12 der anderen Läuferhälfte 9 um eine Polteilung gegeneinander versetzt.

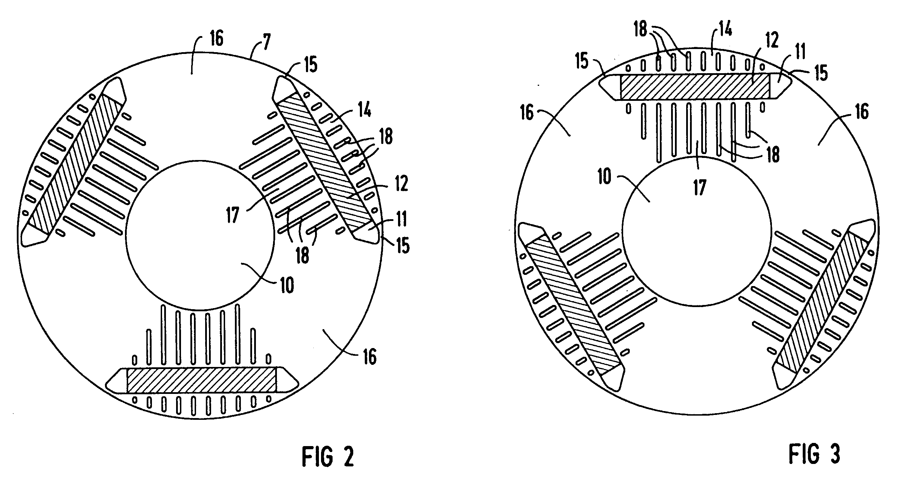

Wie die FIG 2 und 3 zeigen, sind die sich an die Aufnahmeöffnungen 11 nach radial außen hin anschließenden, sich jeweils über eine Polteilung erstreckenden Kernteile 14 des Blechpaketes der jeweiligen Läuferhälfte 8 bzw.9 über schmale Sättigungsstege 15 mit den benachbarten, nicht mit Dauermagneten bestückten Polteilen 16 verbunden. Die Polteile 16 erstrecken sich umfangsmäßig jeweils ebenfalls über eine Polteilung. Durch die Sättigungsstege 15 werden einerseits die Kernteile 14 mechanisch gehalten und andererseits wird durch sie ein magnetischer Kurzschluß der in den Aufnahmeöffnungen 11 eingesetzten Dauermagnete 12 verhindert. Durch die Anordnung der Dauermagnete 12 im Blechpaket besteht eine hohe mechanische Sicherung gegenüber der bei der Drehbewegung des Läufers 7 auftretenden Fliehkraft. Damit eignet sich ein derartiger Läufer auch für sehr hohe Drehzahlen.

In den Kernteilen 14 und dem sich an die Aufnahmeöffnungen 11 nach radial innen zur Läuferwelle 10 hin anschließenden Polsektoren 17 sind Schlitze 18 vorgesehen, die sich im wesentlichen parallel zu dem diese Teile durchsetzenden magnetischen Fluß erstrecken. Durch diese Schlitze 18 wird somit der magnetische Widerstand in Querrichtung zum magnetischen Fluß erhöht und somit einer Reduzierung von Streuverlusten erreicht.

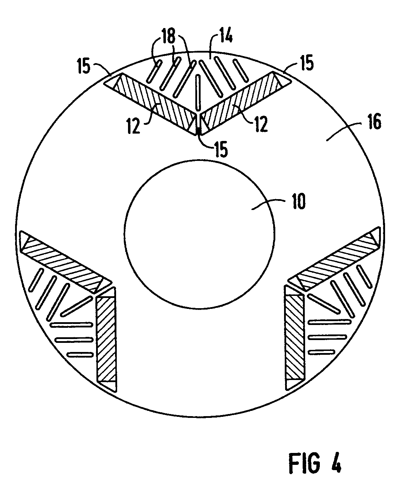

FIG 4 zeigt eine weitere Anordnungsvariante der Dauermagnete 12 im Blechpaket der Läuferhälften 8 bzw.9. Durch die Schrägstellung der Dauermagnete 12 kann mehr Magnetmaterial im Blechpaket untergebracht werden.

Wegen der Unterbringung der Dauermagnete 12 in den Aufnahmeöffnungen 11 der Läuferblechpakete ergibt sich eine einheitliche Oberfläche der Läuferhälften 8 und 12, so daß die Größe des Luftspaltes 13 der Maschine allein durch mechanische Gegebenheiten bestimmt wird. Der Luftspalt 13 kann somit entsprechend klein ausgeführt werden, wodurch auch die für eine Drehzahl- bzw. Spannungsregelung der Maschinen notwendige elektrische Erregerleistung der Erregerspule 5 verkleinert wird.

Mittels der Erregerspule 5, die mit Gleichstrom gespeist wird, kann ein den magnetischen Fluß der Dauermagnete 12 verstärkender oder schwächender magnetischer Fluß erzeugt werden. Damit ergibt sich ein großer Regelbereich für die Drehzahl bzw. Spannung der Maschine.

## Patentansprüche

1. Hybriderregte Synchronmaschine, deren in einem magnetischen Rückschlußjoch (1) angeordnetes Ständerblechpaket axial in mindestens zwei Pakethälften (2 und 3) unterteilt ist, zwischen denen eine als Ringspule ausgebildete Erregerspule (5) angeordnet ist, bei welcher Maschine der Läufer (7) entsprechend der Unterteilung des Ständerblechpaketes ebenfalls unterteilt ist und jede Läuferhälfte (8 bzw. 9) der Polteilung entsprechend aufeinanderfolgend mit Dauermagneten (12) bestückte und nicht mit Dauermagneten (12) bestückte Polteile (14 bzw. 16) aufweist, wobei die eine Läuferhälfte (8) mit Dauermagneten (12) der einen Polarität (N) und die andere Läuferhälfte (9) mit Dauermagneten (12) der anderen Polarität (S) bestückt ist und die mit Dauermagneten (12) bestückten Polteile (14) beider Läuferhälften (8 und 9) um eine Polteilung gegeneinander versetzt sind,
**dadurch gekennzeichnet**,
daß die Dauermagnete (12) in im Blechpaket der Läuferhälften (8 und 9) vorgesehene, sich zumindest annähernd in Umfangsrichtung erstreckende Aufnahmeöffnungen (11) eingesetzt sind und die an die Aufnahmeöffnungen (11) zum Läuferumfang hin angrenzenden Kernteile (14) lediglich über Sättigungsstege (15) mit den nicht mit Dauermagneten (12) bestückten Polteilen (16) verbunden sind.

2. Maschine nach Anspruch 1,
**dadurch gekennzeichnet**,
daß die Kernteile (14) in Querrichtung einen erhöhten magnetischen Widerstand aufweisen.

3. Maschine nach Anspruch 2,
**dadurch gekennzeichnet**,
daß die Kernteile (14) mit sich im wesentlichen parallel zu dem sie durchsetzenden magnetischen Fluß erstreckenden Schlitzen (18) versehen sind.

4. Maschine nach Anspruch 1, 2 oder 3,
**dadurch gekennzeichnet**,
daß der sich nach radial innen an jede Aufnahmeöffnung (11) anschließende, der Polteilung entsprechende Polsektor (17) ebenfalls mit sich im wesentlichen parallel zu dem ihn durchsetzenden magnetischen Fluß erstreckenden Schlitzen (18) versehen sind.
